# EUROPÄISCHE PATENTANMELDUNG

(11) **EP 1 772 671 A1**
(43) Veröffentlichungstag der Anmeldung: **11.04.2007**
(21) Anmeldenummer: 05021981.5
(22) Anmeldetag: 08.10.2005
(51) Int. Cl.: F23D 14/50, F23D 14/54, B23K 9/32, B08B 1/04

(54) **Reinigungsstation für einen robotergestützten oder automatisierten Brenner**

(71) Anmelder: INPRO Innovationsgesellschaft für fortgeschrittene Produktionssysteme in der Fahrzeugindustrie mbH, 10587 Berlin (DE)
(72) Erfinder: Radscheit, Carolin, Dr., 10439 Berlin (DE); Stöber, Ekke, 14193 Berlin (DE); Aizetmüller, Christian, 4563 Micheldorf in Oberösterreich (AT); Braune, Thomas, 10245 Berlin (DE)
(74) Vertreter: Hoffmann, Klaus-Dieter

(57) **Zusammenfassung**

Um ein Reinigen eines Plasma-, WIG- oder Plasma-MIG-Brenners zu ermöglichen, ist erfindungsgemäß das Reinigungselement von einer in der Reinigungsposition des Brenners (1) relativ zu diesem bewegliche Bürste (5) aus nicht metallischen Borsten (10) und einem diese an einem Ende (11) halternden Bürstentopf (12) gebildet, der auf einer parallel zur Achsrichtung der aus Keramik bestehenden Düse (4) des Brenners (1) verlaufenden rotierenden Welle (13) gelagert ist, wobei die nicht metallischen Borsten (10) der rotierenden Bürste (5) in der Reinigungsposition des Brenners (1) an der Unterseite (14) und der Wand (6) des Innenraums (3) der Keramikdüse (4) angreifen und die Ablagerungen (7) an letzterer mechanisch abtragen, die nach anschließender Rückbewegung der rotierenden Bürste (5) von der Keramikdüse (4) ein durch den Düseninnenraum (1) des Brenners (1) geführter Stoß eines in der Druckleitung (8) befindlichen Schutzgases (9) ins Freie trägt.

## Beschreibung

Die Erfindung betrifft eine Reinigungsstation für einen robotergestützten oder automatisierten Brenner, mit einer den Brenner in der Reinigungsposition fixierenden Halterungseinrichtung, einem von außen in den Innenraum der Düse des Brenners in dessen Reinigungsposition eingreifenden rotierenden Reinigungselement, das an der Wand des Düseninnenraums haftende Ablagerung entfernt, und mit einer mit dem Düseninnenraum kommunizierenden Druckleitung mit einem die abgelösten Ablagerungen aus dem Düseninnenraum abführenden Fluidum.

Beim MIG-/MAG-Schweißen mit Robotern in der Fertigung ist der Zustand von Schweißdüse und Kontaktröhrchen schwer zu kontrollieren. Deshalb werden Reinigungsstationen für robotergesteuerte Brenner angeboten, in denen ein Fräser in die Schweißdüse des Brenners fährt und durch Rotationsbewegung die an der Innenwand der Schweißdüse anhaftenden Schweißspritzer und -perlen sowie Schmauchablagerungen entfernt, die durch Preßluft ausgeblasen werden können Anschließend wird bei diesen bekannten Reinigungsstationen ein sog. Schweißschutzspray in den Düseninnenraum des Brenners gesprüht, um ein zu schnelles erneutes Anhaften von Schweißspritzern zu vermeiden. Bei Brennerdüsen aus Keramik wie bei Plasma-, WIG- oder Plasma-MIG-Brennern ist der Einsatz von Schweißschutzspray jedoch nicht empfehlenswert. Die Verschmutzungsproblematik ist allerdings eine ähnliche.

Der Erfindung liegt daher die Aufgabe zugrunde, eine Reinigungsstation der eingangs erwähnten Art zur Verfügung zu stellen, die für robotergeführte oder automatisierte Plasma-, WIG- oder Plasma-MIG-Brenner geeignet ist, die zum Schweißen, Löten, Spritzen, Schneiden oder Beschichten eingesetzt werden.

Erfindungsgemäß wird diese Aufgabe dadurch gelöst, daß zum Reinigen eines Plasma-, WIG- oder Plasma-MIG-Brenners das Reinigungselement aus einer in der Reinigungspostion des Brenners relativ zu diesem bewegliche Bürste aus nicht metallischen Borsten und einem diese an einem Ende halternden Bürstentopf besteht, der auf einer parallel zur Achsrichtung der aus Keramik bestehenden Düse des Brenners verlaufenden rotierenden Welle gelagert ist, und daß die nicht metalluischen Borsten der rotierenden Bürste in der Reinigungsposition des Brenners an der Unterseite und der Wand des Innenraums der Keramikdüse angreifen und die Ablagerungen an letzterer mechanisch abtragen, die nach anschließender Rückbewegung der Bürste von der Keramikdüse ein durch den Düseninnenraum des Brenners geführter Stoß eines in der Druckleitung befindlichen Schutzgases ins Freie trägt.

Die Achse der rotierenden Bürste kann in der Reinigungsposition des Brenners mit der Achse der Keramikdüse zusammenfallen oder exzentrisch zur Achse der Keramikdüse angeordnet sein.

Vorzugsweise bestehen die Borsten der Bürste aus Kunststoff oder Gummi. Bevorzugt weist die Bürste - gesehen in ihrem Längsschnitt - die Form eines umgekehrten Kegelstumpfes auf, wobei die frei auslaufenden, dem Brenner in dessen Reinigungsposition zugewandten Enden der Borsten der Bürste in einer Ebene liegen. Zum Reinigen eines Brenners, dessen Düse zusätzlich zur zentrischen Öffnung mehrere umfangsmäßig und im Abstand zueinander angeordnete Öffnungen aufweist, können die frei auslaufenden, dem Brenner in dessen Reinigungsposition zugewandten Enden der Borsten der Bürste - gesehen in deren Längsschnitt - in zueinander beabstandeten Ebenen liegen, wobei die Ebene der Enden der mittigen Borsten der Bürste näher zur Keramikdüse angeordnet ist als die Ebene der Enden der außenliegenden übrigen Borsten der Bürste. Die mittigen Borsten der Bürste können somit in geeigneter Weise in die zentrisch gelegene Öffnung der Brennerdüse tief eingeführt werden.

Die erfindungsgemäße Reinigungsstation ermöglicht eine einfache und schnelle mechanische Reinigung der Düsen von Plasma-, WIG- oder Hybridbrennern, die zum Schweißen, Löten, Spritzen, Schneiden oder Beschichten eingesetzt werden, und erfordert kein nachträgliches Auftragen eines Schutzsprays.

Bevorzugte Ausführungsformen der Erfindung werden nun anhand der Zeichnungen beschrieben. In diesen sind:
**Fig. 1** eine Seitenansicht einer schematischen Darstellung einer Ausführungsform der Reinigungsstation,
**Fig. 2** eine Seitenansicht nur von Brenner und Bürste der Reinigungsstation in koaxialer Anordnung, wobei die Brennerdüse im Schnitt dargestellt ist,
**Fig. 3** eine Seitenansicht ähnlich der Fig. 2, jedoch mit seitlich zueinander versetzter Anordnung der Achsen des Brenners und der Bürste,
**Fig. 4** eine Seitenansicht des Brenners, wobei die Brennerdüse und von dieser mechanisch abgetragene Ablagerungen im Schnitt dargestellt sind, und
**Fig. 5** eine Seitenansicht einer anderen Ausführungsform der Bürste in axialer Zuordnung zu einer im Schnitt dargestellten Brennerdüse, die meherer Öffnungen aufweist.

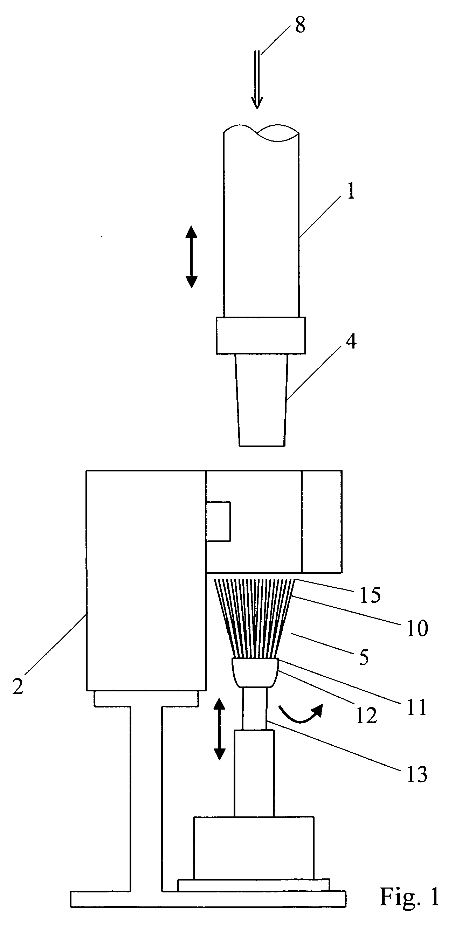

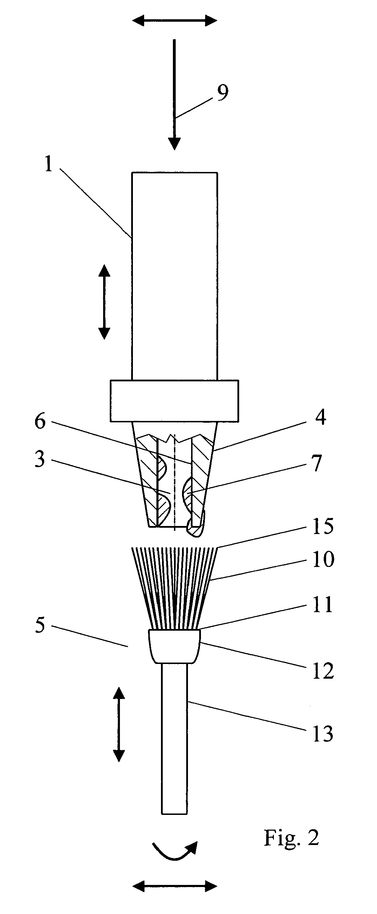

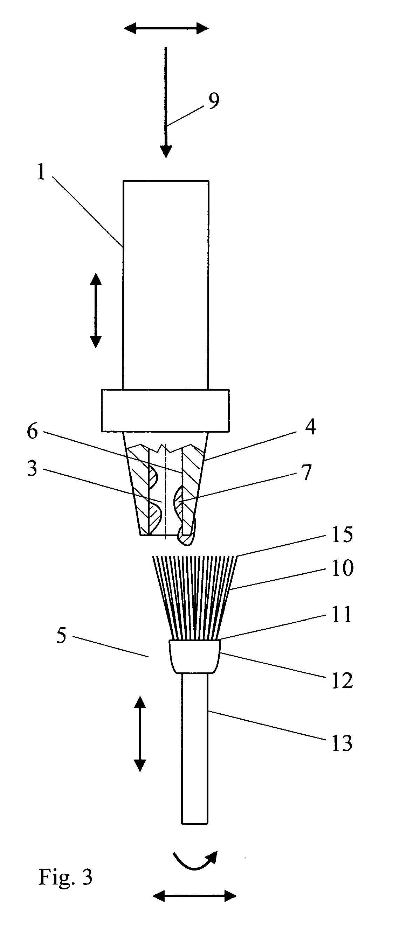

Fig. 1 zeigt schematisch eine Reinigungsstation für einen robotergestützten oder automatisierten Plasma-, WIG- oder Plasma-MIG-Brenner 1, der in Fig. 1 unmittelbar vor Einführung in seine in einer Halterungseinrichtung der Reinigungsstation fixierte Reinigungsposition gezeigt ist. Eine Bürste 5 aus nicht metallischen Borsten 10, die an einem Ende 11 von einem Bürstentopf 12 fest gehaltert sind, bildet das Reinigungselement der Reinigungsstation, das auf einer Welle 13 drehbar gelagert und relativ zum Brenner 1 in dessen Reinigungsposition beweglich ist. Die Achse der Bürste 5 und die Achse der Düse 4 des Brenners 1, die aus Keramik besteht, sind bei der Ausführungsform der Reinigungsstation gemäß Fig. 1 und 2 koaxial zueinander, können jedoch wie bei der Ausführungsform nach Fig. 3 auch zueinander seitlich versetzt angeordnet sein. Die nicht metallischen Borsten 10 der rotierenden Bürste 5 können aus Kunststoff, Gummi oder dergleichen bestehen, wobei von Wichtigkeit ist, daß die Borsten 10 beim Angreifen an der Unterseite 14 und der Wand 6 des Innenraums 3 der Keramikdüse 4 diese nicht beschädigen, aber gleichzeitig stabil genug sind, um, wie die Fig. 2 und 3 zeigen, Ablagerungen 7 wie Schweißperlen und Schmauchablagerungen vom der Wand 6 des Innenraums 3 und der Unterseite 14 der Keramikdüse 4 mechanisch abzutragen.

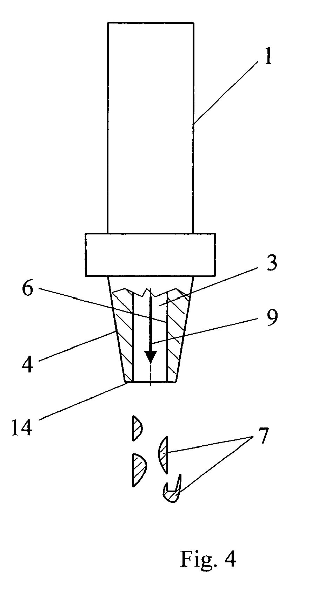

Im Anschluß an die mechanische Reinigung werden die Ablagerungen 7 durch einen in den Düseninnenraum 3 des Brenners 1 geführten Stoß eines in einer Druckleitung 8 befindlichen Schutzgases 9 ins Freie geblasen, wie aus Fig. 4 ersichtlich ist. Ein Schutzspray muß nicht aufgetragen werden.

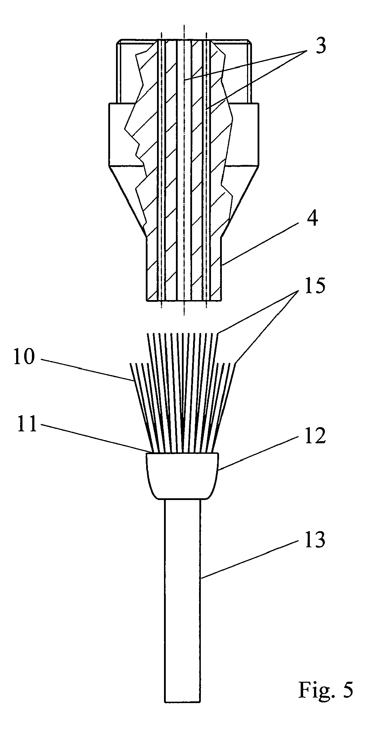

Wie Fig. 5 zeigt, können zum Reinigen eines Brenners 1 mit einer Keramikdüse 4, die zusätzlich zur zentrischen Öffnung mehrere umfangsmäßig und im Abstand zueinander angeordnete Öffnungen aufweist, die frei auslaufenden, dem Brenner 1 zugewandten Enden 15 der Borsten 10 der Bürste 5 - gesehen in deren Längsschnitt - in zueinander beabstandeten Ebenen liegen derart, daß die Ebene der Enden 15 der mittigen Borsten 10 der Bürste 5 näher zur Keramikdüse 4 angeordnet ist als die Ebene der Enden 15 der außenliegenden übrigen Borsten 10 der Bürste 5. Hierdurch können die mittigen Borsten 10 der Bürste 5 in geeigneter Weise in die zentrische Öffnung der Brennerdüse 4 verhältnismäßig tief eingeführt werden.

### Liste der Bezugszeichen:

- 1: Brenner
- 2: Halterungseinrichtung
- 3: Innenraum der Düse
- 4: Düse
- 5: Bürste
- 6: Wand des Düseninnenraums
- 7: Ablagerungen
- 8: Druckleitung
- 9: Schutzgas
- 10: Borsten
- 11: feste Ende der Borsten
- 12: Bürstentopf
- 13: Welle
- 14: Unterseite der Düse
- 15: freie Enden der Borsten

## Patentansprüche

1. Reinigungsstation für einen robotergestützten oder automatisierten Brenner (1), mit einer den Brenner (1) in der Reinigungsposition fixierenden Halterungseinrichtung (2), einem von außen in den Innenraum (3) der Düse (4) des Brenners (1) in dessen Reinigungsposition eingreifenden rotierenden Reinigungselement (5), das an der Wand (6) des Düseninnenraums (3) haftende Ablagerungen (7) entfernt, und mit einer mit dem Düseninnenraum (3) kommunizierenden Druckleitung (8) mit einem die abgelösten Ablagerungen (7) aus dem Düseninnenraum (3) abführenden Fluidum (9),
**dadurch gekennzeichnet,**
**daß** zum Reinigen eines Plasma-, WIG- oder Plasma-MIG-Brenners (1) das Reinigungselement aus einer in der Reinigungsposition des Brenners (1) relativ zu diesem bewegliche Bürste (5) aus nicht metallischen Borsten (10) und einem diese an einem Ende (11) halternden Bürstentopf (12) gebildet ist, der auf einer parallel zur Achsrichtung der aus Keramik bestehenden Düse (4) des Brenners (1) verlaufenden rotierenden Welle (13) gelagert ist, und daß die nicht metallischen Borsten (10) der rotierenden Bürste (5) in der Reinigungsposition des Brenners (1) an der Unterseite (14) und der Wand (6) des Innenraums (3) der Keramikdüse (4) angreifen und die Ablagerungen an letzterer mechanisch abtragen, die nach anschließender Rückbewegung der rotierenden Bürste (5) von der Keramikdüse (4) ein durch den Düseninnenraum (3) des Brenners (1) geführter Stoß eines in der Druckleitung (8) befindlichen Schutzgases (9) ins Freie trägt.

2. Reinigungsstation nach Anspruch 1, **dadurch gekennzeichnet, daß** die Achse der rotierenden Bürste (5) koaxial zur Achse der Keramikdüse (4) des Brenners (1) in dessen Reinigungsposition angeordnet ist.

3. Reinigungsstation nach Anspruch 1, **dadurch gekennzeichnet, daß** die Achse der rotierenden Bürste (5) exzentrisch zur Achse der Keramikdüse (4) des Brenners (1) in dessen Reinigungsposition angeordnet ist.

4. Reinigungsstation nach Anspruch 1 bis 3, **dadurch gekennzeichnet, daß** die Borsten (10) der Bürste (5) aus Kunststoff oder Gummi bestehen und eine geringere Härte als Keramik aufweisen.

5. Reinigungsstation nach Anspruch 1 bis 4, **dadurch gekennzeichnet, daß** die Bürste (5) - gesehen in derem Längsschnitt - die Form eines umgekehrten Kegelstumpfes hat, wobei die frei auslaufenden, dem Brenner (1) in dessen Reinigungsposition zugewandten Enden (16) der Borsten (10) der Bürste (5) in der Reinigungsposition des Brenners (1) in einer Ebene liegen.

6. Reinigungsstation nach Anspruch 1 bis 4, **dadurch gekennzeichnet, daß** die frei auslaufenden, dem Brenner (1) in dessen Reinigungsposition zugewandten Enden (15) der Borsten (10) der Bürste (5) - gesehen in derem Längsschnitt - in zueinander beabstandeten Ebenen liegen, wobei die Ebene der Enden (15) der mittigen Borsten (10) der Bürste (5) näher zur Keramikdüse (4) angeordnet ist als die Ebene der Enden (15) der übrigen Borsten (10) der Bürste (5).
